Europäisches Patentamt

European Patent Office

Office européen des brevets

(19)

(11) **EP 0 908 223 A1**

(12) **EUROPÄISCHE PATENTANMELDUNG**

(43) Veröffentlichungstag:
14.04.1999 Patentblatt 1999/15

(51) Int. Cl.$^6$: **B01D 53/86**

(21) Anmeldenummer: 98116340.5

(22) Anmeldetag: 29.08.1998

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 11.10.1997 DE 19745043

(71) Anmelder:
Katalysatorenwerke Hüls GmbH
45764 Marl (DE)

(72) Erfinder: Werner, Klaus
44805 Bochum (DE)

(54) **Verfahren zur Zerstörung von organischen Halogenverbindungen in staubhaltigen Gasen bei niedriger Temperatur**

(57)     Die vorliegende Erfindung betrifft ein Verfahren zur Zerstörung von organischen Halogenverbindungen, die in staubhaltigen Gasen enthalten sind, durch oxidativen Abbau mit Hilfe von festen Katalysatoren auf Zinkoxid-, Zinndioxid-, Zirkondioxid-, Siliciumdioxid-, Eisenoxid-, Aluminiumoxid- und/oder Titandioxid-Basis in Gegenwart von Sauerstoff, wobei man das staubhaltige Gas bei einer Temperatur im Bereich von 60 °C bis weniger als 250 °C mit dem Katalysator in Kontakt bringt. Das vorliegende Verfahren findet beispielsweise für die Behandlung staubhaltiger Abgase oder staubhaltiger Abluft aus Abfallverbrennungsanlagen, aus Anlagen zur Zementherstellung, aus Anlagen zur Herstellung, Veredelung und/oder Verarbeitung von Metallen, aus Sinteranlagen oder aus Gekrätzeanlagen Anwendungen. Ferner betrifft die vorliegende Erfindung die Verwendung eines Katalysators, der neben Titanoxid auch Wolfram- und/oder Molybdän- und/oder Vanadium- und/oder Barium- und/oder Schwefeloxide und/oder Platin und/oder Palladium und/oder Rhodium in metallischer und/oder oxidischer Form enthält, für das erfindungsgemäße Verfahren.

EP 0 908 223 A1

**Beschreibung**

Die vorliegende Erfindung betrifft ein Verfahren, organische Halogenverbindungen, die in staubhaltigen Gasen enthalten sind, durch oxidativen Abbau mit Hilfe von festen Katalysatoren auf Zinkoxid-, Zinndioxid-, Zirkondioxid-, Siliciumdioxid-, Eisenoxid-, Aluminiumoxid- und/oder Titandioxid-Basis in Gegenwart von Sauerstoff zu zerstören.

In den zurückliegenden Jahren wurden weltweit Anstrengungen unternommen, umweltbelastende Emissionen zu mindern, beispielsweise Schadstoffe wie Schwefeloxid, Stickstoffoxide, Kohlenmonoxid, Staub, Ruß, Schwermetalle, organische Kohlenwasserstoffe sowie halogenierte organische Verbindungen, insbesondere sogenannte „Dioxine". Unter dem Begriff „Dioxine" versteht man üblicherweise polychlorierte Dibenzo-p-dioxine (PCDD) und polychlorierte Dibenzofurane (PCDF).

Es ist bekannt, daß besagte schadstoffhaltige Gase in der Regel bei thermischen Prozessen, in denen kohlenstoffhaltige bzw. organische Substanzen und Halogenverbindungen, gegebenenfalls in Gegenwart von Schwermetallen und unter Luftzutritt, zusammenkommen, entstehen können, wobei man ein solches Gas als Abluft, Abgas oder Prozeßgas - um nur einige zu nennen - bezeichnet, das im wesentlichen frei von Staub oder auch noch staubbeladen sein kann.

DE-OS 38 04 722 offenbart ein Verfahren, eine Vorrichtung und mit Übergangsmetallen dotierte Katalysatoren, die als Hauptbestandteil Titandioxid enthalten, zur Beseitigung einer organischen Verbindung, beispielsweise Butan, Xylol, Ethanol, Dimethylformamid, Chloroform, Chlorbenzol sowie Thiophen, aus Abgasen, wobei Sauerstoff zugegen ist und für die genannten Katalysatoren eine Arbeitstemperatur von 250 bis 400 °C vorgeschlagen wird.

Die Vorrichtung zur Abgasbehandlung gemäß DE-OS 38 04 722 beinhaltet im wesentlichen einen Wärmetauscher bzw. eine Zusatzheizung, einen Reaktor zur Aufnahme des Katalysators und ein Gebläse, mit dessen Hilfe das Abgas über den Katalysator geführt wird.

Es ist allgemein bekannt, daß man einen Gasstrom mit Hilfe eines Wärmetauschers, dem ein Wärmeträgermedium zugeführt wird, oder einer elektrischen Heizung oder einer direkten Beheizung, beispielsweise mit Hilfe eines Gasbrenners, aufheizen kann. Solche Maßnahmen zur Wiederaufheizung eines Gasstroms sind in der Regel energie- und kostenintensiv. Darüber hinaus müssen Gasförderanlagen mit einer deutlich höheren Leistung vorgesehen werden, als es für die Förderung einer vergleichbaren Gasmenge bei einer niedrigeren Temperatur erforderlich wäre.

EP 0 252 521 B1 lehrt ein Verfahren zum Abbau organischer Halogenverbindungen, insbesondere Dioxine, an Katalysatoren bei einer Temperatur oberhalb von 150 °C.

Auch aus der WO 91/04780 ist ein Verfahren zur Verringerung der Emissionen von organischen Produkten unvollständiger Verbrennung in Abgasen von Verbrennungsanlagen bekannt, wobei man das die organischen Produkte, insbesondere Dioxin, enthaltende Abgas bei einer Temperatur von 150 bis 550 °C unter oxidierenden Bedingungen mit einem sogenannten „DeNOx"-Katalysator oder einem modifizierten „DeNOx"-Katalysator beispielsgemäß bei einer Raumgeschwindigkeit oberhalb von 600 h$^{-1}$ behandelt.

Aus EP 0 402 122 B1 sowie EP 0 471 033 B1 gehen ebenfalls Verfahren zur katalytischen Behandlung von Gasen, die Organohalogene enthalten, hervor.

Es ist langläufig bekannt, daß man gemäß der DE-OS 24 58 888 einen sogenannten „DeNOx"-Katalysator bzw. „SCR"-Katalysator auf Titandioxidbasis und weiteren metalloxidischen bzw. sulfatischen Komponenten zur reduktiven Zerstörung von Stickstoffoxiden nach sogenannter „SCR-Technologie" (SCR = selective catalytic reduction) in Gegenwart von molekularem Sauerstoff und Ammoniak bei Temperaturen im Bereich von 150 bis 550 °C und Raumgeschwindigkeiten von 300 bis 100 000 h$^{-1}$ in Abgasen einsetzen kann. Ein Verfahren zur Herstellung solcher Katalysatoren auf Titandioxidbasis ist ebenfalls in der DE-PS 26 58 569 beschrieben. Diesbezüglich lehrt auch DE-PS 26 58 539 ein Verfahren zur reduktiven Zerstörung von Stickoxiden in Abgasen mit einem waben- bzw. zellenförmigen Katalysator, wobei der Katalysator aus monolithischen Strukturkörpern besteht, die von parallel zu ihrer Längsachse verlaufenden Kanälen mit waben- bzw. zellenförmigem Querschnitt durchzogen sind, eine offene Frontfläche von mehr als 50 % besitzen und die Kanäle einen hydraulischen Durchmesser größer als 2 mm aufweisen und ferner unter Betriebsbedingungen mit einer Abgasgeschwindigkeit von mehr als 0,5 m/s durchströmt werden. Der hydraulische Durchmesser ist definiert als

$d_h = 4a/U$  mit $d_h$ = hydraulischer Durchmesser,
a = lichte Querschnittsfläche einer Zelle im Strukturkörper und
U = Umfang der lichten Querschnittsfläche der besagten Zelle.

EP 0 514 682 B1 lehrt einen Katalysator für ein Verfahren zum oxidativen Abbau von organischen Verbindungen, wie CO, niedermolekulare Kohlenwasserstoffe sowie chlorhaltige Verbindungen, insbesondere Dioxine, in Abgasen aus Müll- bzw. Rückstandsverbrennungsanlagen sowie Prozeßöfen, wobei der besagte Katalysator Titan-, Zirkon-, Vanadium- Niob-, Molybdän-, Wolfram-, Chrom-, Zinkoxide bzw. Sulfate, insbesondere der Erdalkalimetalle Kalzium, Strontium sowie Barium, und die Komponenten Palladium, Platin, Ruthenium, Rhodium, Iridium sowie Osmium in metallischer bzw. oxidischer Form enthalten kann.

Aus dem europäischen Patent Nr. 0 559 071 B1 ist eine Gleichung zu entnehmen, die die Merkmale einer Katalysatorstruktur mit kanalförmigen Durchgangsöffnungen hinsichtlich seiner verfahrenstechnischen Eigenschaften für die Anwendung bei einem Verfahren zum oxidativen Abbau von cyclischen organischen Verbindungen , insbesondere Dioxine, in Abgasen aus Verbrennungsanlagen mathematisch beschreibt. Ferner wird beschrieben, daß besagte Katalysatoren auf Basis $TiO_2$, $SiO_2$ oder Eisenoxid und als zusätzliche Komponenten u. a. W-, V-, Cr- oder Mo-Oxide enthalten können und in Waben- oder Plattenform ausgeführt sein können. Im Rahmen des Verfahrens gemäß EP 0 559 071 B1 können besagte Katalysatorelemente bei einer Temperatur im Bereich von 100 bis 500 °C angewendet werden, wobei das Verfahren in zwei aufeinander folgenden Schritten bei verschiedenen Temperaturen durchgeführt wird: Im ersten Schritt werden die genannten Schadstoffe bei 100 bis 250 °C vorwiegend absorbiert und im zweiten Schritt bei gegenüber dem ersten Schritt erhöhter Temperatur, beispielsweise bei 300 bis 550 °C, oxidativ abgebaut. Auch bei diesem Verfahren ist es erforderlich, für den oxidativen Abbau der Schadstoffe das Abgas auf eine Temperatur, die oberhalb von 250 °C liegt, aufzuheizen.

Keines der zuvor genannten Verfahren zur katalytischen Zerstörung von Organohalogenen sieht eine Anwendung auch für staubhaltige Gase vor.

Hingegen offenbart EP 0 634 206 A1 u. a. ein Verfahren zur Zersetzung von organischen Halogenverbindungen in staubhaltigen Gasen, in dem das staubhaltige Gas in Gegenwart von Sauerstoff bei 250 bis 500 °C über den Katalysator geleitet und der Staub anschließend abgetrennt wird. Beispielsgemäß wird hierzu das Abgas einer Vorentstaubung unterzogen, wobei im Abgas, das über den Katalysator geleitet wird, der Staubgehalt weniger als 10 mg/Nm$^3$ beträgt; besagte Stäube enthalten weniger als 0,6 Gew.-% Kohlenstoff. Auch ein solches Verfahren ist aufwendig, kostenintensiv und mit einer Reihe von Randbedingungen verbunden.

Darüber hinaus ist der noch nicht veröffentlichten deutschen Patentanmeldung Nr. 196 35 385.8 zu entnehmen, daß man an Titanoxidhaltigen Katalysatoren, wie sie in diesem Zusammenhang auch für die reduktive Zerstörung von Stickstoffoxiden nach SCR-Technologie in staubhaltigen Abgasen aus Anlagen zur Herstellung von Zement eingesetzt werden, halogenierte organische Verbindungen, insbesondere Dioxine, abbauen kann.

Der Erfindung lag die Aufgabe zugrunde, ein besonders wirtschaftliches Verfahren insbesondere zum Abbau halogenierter organischer Verbindungen, wie Dioxine, mit Hilfe eines Katalysators in staubhaltigen Gasen bereitzustellen.

Die gestellte Aufgabe wird erfindungsgemäß entsprechend den Angaben der Patentansprüche gelöst.

Überraschenderweise wurde nun gefunden, daß man organische Halogenverbindungen, wie z. B. Dioxine, die in einem staubhaltigen Gas enthalten sind, durch das In-Kontakt-Bringen des staubhaltigen Gases mit einem festen Katalysator auf Zinkoxid-, Zinndioxid-, Zirkondioxid-, Siliciumdioxid-, Eisenoxid-, Aluminiumoxid- und/oder insbesondere Titandioxid-Basis in Gegenwart von Sauerstoff bei einer Temperatur im Bereich von 60 °C bis weniger als 250 °C in einfacher und wirtschaftlicher Weise abbauen kann. Es ist ferner überraschend, daß man auch bei diesen Temperaturen gute Zerstörungsraten, die insbesondere für wirtschaftliche Anwendungen von Interesse sind, erzielen kann.

Besonders überraschend ist, daß dabei insbesondere für Dioxine sowohl in der Gasphase als auch bezüglich Staub Zerstörungsraten gleicher Größenordnung erzielt werden können, so daß das vorliegende Verfahren ganz besonders für den energie- und kostengünstigen Temperaturbereich unterhalb von 250 °C in vorteilhafter Weise Anwendung findet.

Gegenstand der vorliegenden Erfindung ist daher ein Verfahren zur Zerstörung von organischen Halogenverbindungen, die in staubhaltigen Gasen enthalten sind, durch oxidativen Abbau mit Hilfe von festen Katalysatoren auf Zinkoxid-, - Zinndioxid-, Zirkondioxid-, Siliciumdioxid-, Eisenoxid-, Aluminiumoxid- und/oder Titandioxid-Basis in Gegenwart von Sauerstoff, das dadurch gekennzeichnet ist, daß man das staubhaltige Gas bei einer Temperatur im Bereich von 60 °C bis weniger als 250 °C mit dem Katalysator in Kontakt bringt.

Bevorzugt wendet man das erfindungsgemäße Verfahren zur Zerstörung von polyhalogenierten, aromatischen Kohlenwasserstoffen an, insbesondere zur Zerstörung von polychlorierten Dibenzo-p-dioxinen und polychlorierten Dibenzofuranen. Vorzugsweise wendet man das erfindungsgemäße Verfahren an, wenn der Staubgehalt im Gas mehr als 0,5 mg/Nm$^3$ beträgt, besonders bevorzugt bei Staubgehalten von mehr als 10 mg/Nm$^3$ bis 250 g/Nm$^3$, ganz besonders bevorzugt bei Staubgehalten von mehr als 10 mg/Nm$^3$ bis 5 g/Nm$^3$.

Vorzugsweise betreibt man den Katalysator beim erfindungsgemäßen Verfahren bei einer Temperatur im Bereich von 60 bis weniger als 180 °C, besonders bevorzugt im Bereich von 70 bis weniger als 150°C.

Geeigneterweise verwendet man erfindungsgemäß einen Katalysator, der neben Titanoxid auch Wolfram- und/oder Molybdän- und/oder Vanadium- und/oder Barium-Verbindungen und/oder deren Schwefeloxide und/oder Platin und/oder Palladium und/oder Rhodium in metallischer und/oder oxidischer Form enthält. Die Herstellung solcher Katalysatoren ist beispielsweise aus DE-OS 24 58 888, DE-AS 26 58 569, aber auch aus den bisher noch nicht veröffentlichten DE 196 35 383.1 sowie DE 196 37 792.7 zu entnehmen.

Somit ist auch Gegenstand der vorliegenden Erfindung die Verwendung eines Katalysators, der neben Titanoxid auch Wolfram- und/oder Molybdän- und/oder Vanadium- und/oder Barium- und/oder Schwefeloxide und/oder Platin und/oder Palladium und/oder Rhodium in metallischer und/oder oxidischer Form enthält, beim erfindungsgemäßen Verfahren.

Besonders bevorzugt sind hierfür Katalysatoren auf $TiO_2$-Basis, die geeigneterweise Wolframverbindungen in einer Menge von 1 bis 12 Gew.-%, gerechnet als $WO_3$, und Vanadiumverbindungen in einer Menge von 0,5 bis 10 Gew.-%, ganz besonders bevorzugt in einer Menge von 1 bis 3,5 Gew.-%, gerechnet als $V_2O_5$, enthalten. Darüber hinaus können diese Katalysatoren $BaSO_4$ enthalten.

Geeigneterweise können solche Katalysatoren zusätzlich mit einem Edelmetall, wie Pt und/oder Pd und/oder Rh, dotiert sein, das sich bevorzugt im Bereich der Oberflächen des Katalysators befindet.

Im allgemeinen betreibt man das erfindungsgemäße Verfahren in der Art, daß man das staubhaltige Gas über ein Katalysatorbett leitet, das vorzugsweise waben- bzw. zellenförmige oder plattenförmige Katalysatoren enthält. Vorteilhafterweise kann das besagte Gas, soweit es die erforderliche Betriebstemperatur mitbringt, direkt über das Katalysatorbett gefahren werden. Man kann aber auch, beispielsweise für Anfahrvorgänge, einen vergleichsweise kleinen Wärmetauscher oder E-Heizer oder auch einen kleinen Gasbrenner, der im Gasstrom vor dem Katalysatorbett angeordnet ist, vorsehen. Geeigneterweise ist dem Katalysatorbett ein Gebläse zur Gasförderung nachgeschaltet. Ein besonderer Vorteil des erfindungsgemäßen Verfahrens besteht darin, daß die zu fördernden Gasströme kleiner sind als bei Verfahren, die bei einer deutlich höheren Temperatur, aber mit vergleichbaren Gasmengen betrieben werden. Hierdurch wird es beim erfindungsgemäßen Verfahren möglich, auch vergleichsweise kleinere, preisgünstigere Gebläse vorzusehen. Darüber hinaus kann der Anwender des erfindungsgemäßen Verfahrens gegenüber den herkömmlichen Verfahren Energiekosten einsparen.

Vorzugsweise setzt man erfindungsgemäß einen waben- bzw. zellenförmigen oder plattenförmigen Katalysator mit einer geometrischen Oberfläche zwischen 780 und 200 $m^2/m^3$ ein. Man kann einen waben- bzw. zellenförmigen oder plattenförmigen Katalysator mit einem hydraulischen Durchmesser $\geq 2$ mm verwenden. Geeigneterweise setzt man besagte Katalysatoren mit einem hydraulischen Durchmesser von $\leq 17$ mm ein. Beim erfindungsgemäßen Verfahren setzt man vorzugsweise waben- bzw. zellenförmige oder plattenförmige Katalysatoren mit einem hydraulischen Durchmesser von 3,5 bis 13 mm, besonders bevorzugt von 5,0 bis 11,0 mm, ein, wobei die offene Frontfläche geeigneterweise $\geq 60$ %, vorzugsweise 70 bis 85 %, der angeströmten Querschnittsfläche eines Katalysatorelements beträgt.

Beim erfindungsgemäßen Verfahren werden besagte Katalysatoren geeigneterweise mit einer Leerrohrgeschwindigkeit von mehr als 0,1 m/s i. N., vorzugsweise mit einer Leerrohrgeschwindigkeit von mehr als 0,5 m/s, besonders bevorzugt mit einer Leerrohrgeschwindigkeit von 1 bis 6 m/s, durchströmt, wobei man das Verfahren vorzugsweise bei einer Raumgeschwindigkeit (SV = space velocity) im Bereich von 100 bis 10 000 $h^{-1}$, besonders bevorzugt im Bereich von 100 bis 5 000 $h^{-1}$, ganz besonders bevorzugt im Bereich von 200 bis 2 000 $h^{-1}$, betreibt.

Im allgemeinen kann man das erfindungsgemäße Verfahren in organohalogenhaltigen und staubhaltigen Gasen, insbesondere dioxinhaltigen und staubhaltigen Gasen, anwenden, wobei der Gehalt an Organohalogenen in den besagten Gasen üblicherweise unterhalb 10 Gew.-ppm, insbesondere im Bereich von 0,1 bis 500 ng TE/$Nm^3$, liegt.

Üblicherweise enthalten Gase, die dem erfindungsgemäßen Verfahren zugeführt werden, Staubmengen von mehr als 0,5 mg Staub/$Nm^3$ Gas, die Gase können aber auch kleinere Mengen Staub enthalten. Geeigneterweise ordnet man das erfindungsgemäße Verfahren an den Stellen in einen Prozeß bzw. in den Abgasstrom oder eine Abluftführung ein, wo das zu behandelnde Gas, das auch noch andere Schadstoffe, wie z. B. $NO_x$, $SO_x$, $CO_2$, CO, Kohlenwasserstoffe - um nur einige zu nennen -, enthalten kann, eine Temperatur von weniger als 250 °C, vorzugsweise weniger als 180 °C, besitzt.

Das erfindungsgemäße Verfahren kann man mit anderen Verfahrensstufen zur Abgasreinigung, wie z. B. Entstaubungsanlagen, Wäschereinheiten, Sorptionsanlagen, CO-, $SO_x$-, $NO_x$-Minderungsanlagen, insbesondere solchen, die nach SCR-Technologie arbeiten, kombinieren.

EP 0 611 591 A1 lehrt u. a. ein kombiniertes $NO_x$-, Dioxin- und CO-Minderungsverfahren, das man beispielsweise mit dem erfindungsgemäßen Verfahren verbinden kann.

So kann man beim erfindungsgemäßen Verfahren einen Katalysator einsetzen, der zusätzlich Kohlenmonoxid zu Kohlendioxid umsetzt. Vorteilhafterweise kann man beim vorliegenden Verfahren am Katalysator auch unter Zugabe eines Reduktionsmittels, wie Ammoniak und/oder Harnstoff, in den Gasstrom zusätzlich Stickoxide zerstören.

Vorteilhafterweise wendet man das erfindungsgemäße Verfahren für die erfindungsgemäße Behandlung von staubhaltiger Abluft oder von staubhaltigen Abgasen oder von staubhaltigen Prozeßgasen aus Verbrennungsanlagen, aus Verschwelungsanlagen, aus Anlagen zur Zementherstellung, aus Anlagen zur Herstellung, Veredelung und/oder Verarbeitung von Metallen, insbesondere Stähle und Buntmetalle, aus Sinteranlagen sowie aus Gekrätzeanlagen an.

Gegenstand der vorliegenden Erfindung ist somit auch die Anwendung des erfindungsgemäßen Verfahrens für die Behandlung staubhaltiger Abgase oder staubhaltiger Abluft aus Abfallverbrennungsanlagen, aus Anlagen zur Zementherstellung, aus Anlagen zur Herstellung, Veredelung und/oder Verarbeitung von Metallen, aus Sinteranlagen oder aus Gekrätzeanlagen.

Bei Anwendung des erfindungsgemäßen Verfahrens kann man insbesondere den Gehalt an Dioxinen in staubhaltigen Gasen in hervorragend einfacher und wirtschaftlicher Weise mindern.

Das vorliegende Verfahren ist besonders wirtschaftlich, da die organischen Halogenverbindungen, insbesondere Dioxine, sowohl in der Gasphase als auch hinsichtlich Staub schon bei Temperaturen zwischen 60 und < 250 °C in vorteilhafter Weise zerstört werden, ohne daß zusätzliche Energie und/oder Sauerstoff zugeführt werden muß.

Das erfindungsgemäße Verfahren ist zudem besonders ökologisch, da sich bei der Durchführung der nachfolgend beschriebenen Versuche auch gezeigt hat, daß nach mehr als 2 500 Betriebsstunden auf den verwendeten Katalysatoren nur unwesentliche Mengen an PCDD/F vorliegen (zwischen 10 und 40 ng TE/kg), das sind um Größenordnungen weniger als bei Adsorption der Dioxine über die Betriebszeit zu erwarten war, und somit auch die gebrauchten Katalysatoren wirtschaftlich wiederverwendbar werden und keine zusätzliche ökologische Belastung darstellen.

Darüber hinaus können bei der erfindungsgemäßen Behandlung besagter Gase auch nichthalogenierte Kohlenwasserstoffe oxidativ abgebaut werden.

Die vorliegende Erfindung wird durch die nachfolgenden Beispiele näher erläutert ohne den Gegenstand der Erfindung zu beschränken.

## Beispiele:

Versuchsbedingungen:

Die Versuchsanlage bestand im wesentlichen aus einem dreischüssigen, beheizbaren Katalysatorbett, dem ein Gebläse nachgeschaltet war. Die Testanlage war mit kontinuierlicher Temperaturmessung und Probenahmestutzen jeweils vor und hinter jeder Katalysatorlage ausgestattet. Die Anlage wurde im Durchschnitt mit einem Gasvolumen von 150 m$^3$/h i. N. tr. beaufschlagt. Das Gas wies in der Regel PCDD/F-Gehalte von 1 bis 10 ng TE/Nm$^3$ auf. Die PCDD/F-Probenahmen und Analytik wurden nach den an sich bekannten Verfahren gemäß VDI-Richtlinie 3499 durchgeführt. Der Staubgehalt im Gas betrug üblicherweise 30 bis 200 mg/m$^3$ i. N. tr. Die Sauerstoffgehalte im Gas lagen zwischen 15 und 16 Vol.-% i. N. f. Der Feuchtigkeitsgehalt betrug nahezu konstant 6 Vol.-% i. N. f. Die Testanlage wurde über mehrere Monate mit verschiedensten Katalysatortypen im Temperaturbereich zwischen 60 und 250 °C betrieben.

Nachfolgend sind Angaben zu den verwendeten Katalysatoren und die Ergebnisse erfindungsgemäß durchgeführter Versuche aufgelistet:

Katalysatormaterial:    $TiO_2/WO_3/V_2O_5$
Katalysatorvolumen:    jeweils 3 Waben vom gleichen Typ hintereinander
Katalysatormaße:    150 mm x 150 mm Querschnittsfläche und 500 mm Länge
Katalysatorgeometrie:    Typ A mit $d_h$ = 3,5 mm
    Typ B mit $d_h$ = 5,1 mm
    Typ C mit $d_h$ = 5,6 mm

| Versuch Nr. | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Gastemperatur [°C] | 70 ± 2 | | | 112 ± 2 | | | 147 ± 2 | | | 190 ± 2 | | | 245 ± 2 | | |
| Katalysatortyp | A | B | C | A | B | C | A | B | C | A | B | C | A | B | C |
| PCDD/F-Zerstörungsraten bezüglich Gasphase | | | | | | | | | | | | | | | |
| PCDD/F (Gasphase) vor Katalysatoren [ng TE/Nm³] | 2,33 | 2,81 | 2,69 | 2,88 | 2,72 | 2,91 | 2,39 | 2,28 | 2,46 | 1,94 | 2,09 | 1,88 | 2,66 | 2,33 | 2,92 |
| PCDD/F (Gasphase) nach Katalysatoren [ng TE/Nm³] | 1,27 | 1,65 | 1,61 | 1,49 | 1,55 | 1,63 | 0,98 | 1,05 | 1,17 | 0,46 | 0,69 | 0,64 | 0,20 | 0,38 | 0,60 |
| Zerstörungsrate [%] | 45,5 | 41,3 | 40,1 | 48,3 | 43,0 | 44,0 | 59,0 | 54,1 | 52,6 | 76,4 | 66,8 | 66,1 | 92,4 | 83,7 | 79,6 |
| PCDD/F-Zerstörungsrate bezüglich Staub | | | | | | | | | | | | | | | |
| PCDD/F (Staub) vor Katalysatoren [ng TE/Nm³] | 17.300 | 23.600 | 11.600 | 19.100 | 26.800 | 14.200 | 19.200 | 24.100 | 14.400 | 22.200 | 23.000 | 15.900 | 16.600 | 21.600 | 16.800 |
| PCDD/F (Staub) nach Katalysatoren [ng TE/Nm³] | 9.700 | 13.900 | 7.100 | 9.900 | 15.600 | 8.500 | 8.400 | 11.400 | 6.800 | 6.100 | 7.600 | 6.000 | 1.500 | 3.700 | 3.400 |
| Zerstörungsrate [%] | 43,9 | 41,1 | 38,8 | 48,2 | 41,8 | 40,2 | 56,2 | 52,7 | 52,8 | 72,5 | 67,0 | 62,3 | 91,0 | 82,0 | 79,8 |

EP 0 908 223 A1

**Patentansprüche**

1. Verfahren zur Zerstörung von organischen Halogenverbindungen, die in staubhaltigen Gasen enthalten sind, durch oxidativen Abbau mit Hilfe von festen Katalysatoren auf Zinkoxid-, Zinndioxid-, Zirkondioxid-, Eisenoxid-, Siliciumdioxid-, Aluminiumoxid- und/oder Titandioxid-Basis in Gegenwart von Sauerstoff,
dadurch gekennzeichnet,
daß man das staubhaltige Gas bei einer Temperatur im Bereich von 60 °C bis weniger als 250 °C mit dem Katalysator in Kontakt bringt.

2. Verfahren nach Anspruch 1,
dadurch gekennzeichnet,
daß man das staubhaltige Gas über ein Katalysatorbett leitet, das waben- bzw. zellenförmige oder plattenförmige Katalysatoren enthält.

3. Verfahren nach Anspruch 1 oder 2,
dadurch gekennzeichnet,
daß man einen Katalysator mit einem hydraulischen Durchmesser $\geq$ 2 mm einsetzt.

4. Verfahren nach mindestens einem der Ansprüche 1 bis 3,
dadurch gekennzeichnet,
daß man einen Katalysator mit einem hydraulischen Durchmesser $\leq$ 17 mm einsetzt.

5. Verfahren nach Anspruch 3 oder 4,
dadurch gekennzeichnet,
daß man einen Katalysator mit einem hydraulischen Durchmesser von 3,5 bis 13,0 mm einsetzt.

6. Verfahren nach mindestens einem der Ansprüche 1 bis 5,
dadurch gekennzeichnet,
daß man einen Katalysator mit einer offenen Frontfläche $\geq$ 60 % einsetzt.

7. Verfahren nach Anspruch 6,
dadurch gekennzeichnet,
daß man einen Katalysator mit einer offenen Frontfläche von 70 bis 85 % einsetzt.

8. Verfahren nach mindestens einem der Ansprüche 1 bis 7,
dadurch gekennzeichnet,
daß man einen Katalysator mit einer geometrischen Oberfläche zwischen 780 und 200 $m^2/m^3$ einsetzt.

9. Verfahren nach mindestens einem der Ansprüche 1 bis 8,
dadurch gekennzeichnet,
daß man den Katalysator mit einer Gasgeschwindigkeit von mehr als 0,5 m/s i. N. durchströmt.

10. Verfahren nach Anspruch 9,
dadurch gekennzeichnet,
daß man den Katalysator mit einer Gasgeschwindigkeit von 1 bis 6 m/s i. N. durchströmt.

11. Verfahren nach mindestens einem der Ansprüche 1 bis 10,
dadurch gekennzeichnet,
daß man den Katalysator bei einer Temperatur im Bereich von 60 bis < 180 °C betreibt.

12. Verfahren nach mindestens einem der Ansprüche 1 bis 11,
dadurch gekennzeichnet,
daß der Staubgehalt im Gas mehr als 0,5 mg/$Nm^3$ beträgt.

13. Verfahren nach Anspruch 12,
dadurch gekennzeichnet,
daß der Staubgehalt im Gas mehr als 10 mg/$Nm^3$ beträgt.

14. Verfahren nach mindestens einem der Ansprüche 1 bis 13,
dadurch gekennzeichnet,
daß man einen Katalysator einsetzt, der neben Titandioxid auch Wolfram- und/oder Molybdän- und/oder Vanadium- und/oder Barium- und/oder Schwefeloxide und/oder Platin und/oder Palladium und/oder Rhodium in metallischer und/oder oxidischer Form enthält.

15. Verfahren nach mindestens einem der Ansprüche 1 bis 14,
dadurch gekennzeichnet,
daß man das Verfahren zur Zerstörung von polyhalogenierten aromatischen Kohlenwasserstoffen anwendet.

16. Verfahren nach Anspruch 15,
dadurch gekennzeichnet,
daß man das Verfahren zur Zerstörung von polychlorierten Dibenzo-p-dioxinen und polychlorierten Dibenzofuranen anwendet.

17. Verfahren nach mindestens einem der Ansprüche 1 bis 16,
dadurch gekennzeichnet,
daß man unter Zugabe eines Reduktionsmittels in den Gasstrom am Katalysator zusätzlich Stickstoffoxide zerstört.

18. Verfahren nach mindestens einem der Ansprüche 1 bis 17,
dadurch gekennzeichnet,
daß man einen Katalysator einsetzt, der zusätzlich Kohlenmonoxid zu Kohlendioxid umsetzt.

19. Verfahren nach mindestens einem der Ansprüche 1 bis 18,
dadurch gekennzeichnet,
daß man das Verfahren bei einer Raumgeschwindigkeit (SV) im Bereich von 100 bis 10 000 $h^{-1}$ durchführt.

20. Verwendung eines Katalysators nach den Ansprüchen 1 bis 19,
der neben Titandioxid auch Wolfram- und/oder Molybdän- und/oder Vanadium- und/oder Barium- und/oder Schwefeloxide und/oder Platin und/oder Palladium und/oder Rhodium in metallischer und/oder oxidischer Form enthält.

21. Anwendung des Verfahrens nach den Ansprüchen 1 bis 20
für die Behandlung staubhaltiger Abgase oder staubhaltiger Abluft aus Abfallverbrennungsanlagen, aus Anlagen zur Zementherstellung, aus Anlagen zur Herstellung, Veredelung und/oder Verarbeitung von Metallen, aus Sinteranlagen oder aus Gekrätzeanlagen.

# EP 0 908 223 A1

Europäisches Patentamt

**EUROPÄISCHER RECHERCHENBERICHT**

Nummer der Anmeldung

EP 98 11 6340

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 195 04 597 A (BASF AG) 14. August 1996<br><br>* Seite 3, Zeile 8 - Seite 5, Zeile 4; Beispiel *<br><br>--- | 1,11-17, 20,21 | B01D53/86 |
| X,D | EP 0 559 071 A (BASF AG) 8. September 1993<br><br>* Seite 2, Zeile 31 - Seite 6, Zeile 5; Tabelle *<br><br>--- | 1-17, 19-21 | |
| X | EP 0 488 331 A (HIRAOKA MASAKATSU ;NIPPON KOKAN KK (JP); NGK INSULATORS LTD (JP))<br>3. Juni 1992<br>* Seite 4, Zeile 29 - Zeile 33 *<br>* Seite 7, Zeile 15 - Zeile 34; Beispiele *<br><br>--- | 1-7,9, 11-17, 19-21 | |
| X | EP 0 547 226 A (NIPPON CATALYTIC CHEM IND)<br>23. Juni 1993<br>* Seite 2, Zeile 43 - Seite 4, Zeile 5; Beispiele *<br><br>----- | 1-4,11, 14-21 | |
| | | | **RECHERCHIERTE SACHGEBIETE (Int.Cl.6)**<br><br>B01D |

Der vorliegende Recherchenbericht wurde für alle Patentansprüche erstellt

| Recherchenort | Abschlußdatum der Recherche | Prüfer |
|---|---|---|
| MÜNCHEN | 13. Januar 1999 | Eijkenboom, A |

**ANHANG ZUM EUROPÄISCHEN RECHERCHENBERICHT
ÜBER DIE EUROPÄISCHE PATENTANMELDUNG NR.**          EP 98 11 6340

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-01-1999

| Im Recherchenbericht angeführtes Patentdokument | Datum der Veröffentlichung | Mitglied(er) der Patentfamilie | Datum der Veröffentlichung |
|---|---|---|---|
| DE 19504597 A | 14-08-1996 | WO 9624433 A | 15-08-1996 |
|  |  | EP 0804271 A | 05-11-1997 |
| EP 0559071 A | 08-09-1993 | DE 4206599 A | 09-09-1993 |
|  |  | AT 131408 T | 15-12-1995 |
|  |  | DE 59301131 D | 25-01-1996 |
|  |  | ES 2080540 T | 01-02-1996 |
|  |  | JP 6000386 A | 11-01-1994 |
| EP 0488331 A | 03-06-1992 | JP 2542290 B | 09-10-1996 |
|  |  | JP 4265122 A | 21-09-1992 |
|  |  | JP 2010835 C | 02-02-1996 |
|  |  | JP 4200703 A | 21-07-1992 |
|  |  | JP 7034845 B | 19-04-1995 |
|  |  | JP 4200722 A | 21-07-1992 |
|  |  | JP 6059387 B | 10-08-1994 |
|  |  | CA 2055521 A | 31-05-1992 |
|  |  | DE 69125103 D | 17-04-1997 |
|  |  | DE 69125103 T | 17-07-1997 |
|  |  | KR 9504139 B | 27-04-1995 |
|  |  | US 5294419 A | 15-03-1994 |
| EP 0547226 A | 23-06-1993 | WO 9219366 A | 12-11-1992 |
|  |  | US 5430230 A | 04-07-1995 |

EPO FORM P0461

Für nähere Einzelheiten zu diesem Anhang : siehe Amtsblatt des Europäischen Patentamts, Nr. 12/82